# FASCICULE DE BREVET EUROPEEN

(11) **EP 1 067 005 B1**
(45) Date de publication et mention de la délivrance du brevet: **27.08.2003**
(21) Numéro de dépôt: 00401913.9
(22) Date de dépôt: 04.07.2000
(51) Int. Cl.: B60K 11/04, F28F 9/00

(54) **Dispositif de fixation d'un module sur un support dans un véhicule automobile**
Anordnung zum Befestigen von Modulen auf einem Träger in einem Kraftfahrzeug
Arrangement for fastening modules to a support in a motor vehicle

(30) Priorité: 08.07.1999 FR 9908868
(43) Date de publication de la demande: 10.01.2001
(73) Titulaire: VALEO THERMIQUE MOTEUR, 78321 La Verrière (FR)
(72) Inventeur: Guyomard, Jean-Nicolas, 27930 Le Mesnil Fuguet (FR); Rose, Christian, 78280 Guyancourt (FR); Mahe, Christian, 78490 Le Tremblay S/Mauldre (FR)
(74) Mandataire: Rolland, Jean-Christophe

(56) Documents cités:
- EP-A- 0 478 403

## Description

L'invention concerne la fixation d'un module sur un support fixe d'un véhicule automobile, en particulier une face avant.

La fixation d'un module relativement encombrant dans le compartiment moteur d'un véhicule automobile présente certaines difficultés. C'est notamment le cas des échangeurs de chaleur, tels que les radiateurs de refroidissement, qui comportent une première partie d'extrémité devant être fixée sur des premiers moyens de support, par exemple une traverse de face avant, et une seconde partie d'extrémité devant être fixée sur des seconds moyens de support, par exemple le châssis.

Ce type de module comprend sur des parties d'extrémité des pions de fixation destinés à être introduits dans des orifices formés dans les moyens de support, et des trous pour recevoir des vis destinées à l'immobiliser.

Du fait de leurs grandes dimensions, les moyens de support, tels que le châssis, présentent des tolérances qui peuvent ne pas être compatibles avec les autres moyens de support, tels que la face avant. L'installation du module peut donc nécessiter la recherche sur la chaîne de montage d'une face avant compatible, voire dans les cas extrêmes une adaptation du châssis.

Le document EP 0 478 403 A1 divulgue un dispositif selon le préambule de la revendication 1.

La présente invention a pour but de remédier à l'inconvénient précité.

L'invention propose à cet effet un dispositif de fixation sur des moyens de support d'un module comprenant une partie d'extrémité munie d'au moins un pion de fixation destiné à coopérer avec des moyens de fixation portés par les moyens de support, et dans lequel on prévoit, d'une part, une garniture élastique, de forme choisie, munie d'un évidement pour recevoir le pion de fixation de la partie d'extrémité, et d'autre part, un organe amovible muni d'une première extrémité comportant deux bras élastiques présentant des concavités tournées l'une vers l'autre de manière à enserrer la garniture recevant le pion de fixation et d'une seconde extrémité destinée à coopérer avec les moyens de fixation en vue de sa solidarisation aux moyens de support avec un degré de liberté de mouvement choisi de sorte qu'il assure un mouvement conjoint des deux bras dans lequel l'un d'eux se déplace en direction de l'autre.

L'organe amovible permet ainsi de rattraper les écarts de tolérance tout en facilitant l'immobilisation du module.

Dans un premier mode de réalisation préférentiel, l'organe est agencé pour permettre de rattraper les écarts de tolérance par déplacement linéaire. Pour ce faire, les moyens de fixation sont préférentiellement réalisés sous la forme de deux rainures parallèles et la seconde extrémité de l'organe comporte une semelle munie de deux bords parallèles formant nervures agencées pour être introduites par coulissement dans les rainures.

Dans un second mode de réalisation, l'organe est agencé pour permettre de rattraper les écarts de tolérance par rotation. Pour ce faire, la seconde extrémité de l'organe est en forme d'axe et comprend des moyens d'encliquetage coopérant avec un logement formant les moyens de fixation des moyens de support.

Le dispositif selon l'invention pourra comprendre d'autres caractéristiques complémentaires pouvant être prises séparément ou en combinaison, et notamment :
- deux organes présentant des degrés de liberté de mouvement de même type de manière à enserrer deux garnitures recevant des pions de fixation écartés l'un de l'autre et placés en un même niveau sur la partie d'extrémité du module;
- une garniture présentant une forme générale cylindrique, et comportant de préférence, sur sa surface externe au contact des bras, un renflement s'étendant sensiblement parallèlement aux génératrices du cylindre.

L'invention s'applique tout particulièrement à la solidarisation d'un module, notamment de type échangeur de chaleur, à une partie d'une traverse d'une face avant d'un véhicule automobile.

D'autres caractéristiques et avantages de l'invention apparaîtront à l'examen de la description détaillée ci-après, et des dessins annexés, sur lesquels :
- la figure 1 est un schéma illustrant, dans une vue en coupe transversale, un module de type radiateur de refroidissement en cours d'installation dans le compartiment moteur d'un véhicule, à l'aide d'un dispositif de fixation selon l'invention;
- la figure 2 est un schéma illustrant le module de la figure 1, une fois installé;
- la figure 3 est un schéma illustrant une garniture élastique;
- la figure 4 est un schéma illustrant un premier mode de réalisation de l'organe amovible selon l'invention;
- la figure 5 est un schéma illustrant l'organe amovible de la figure 4 enserrant la garniture de la figure 3;
- la figure 6 est un schéma illustrant un second mode de réalisation de l'organe amovible selon l'invention, dans une vue de côté; et
- la figure 7 est un schéma illustrant l'organe amovible de la figure 6 enserrant la garniture de la figure 3, dans une vue du dessus.

Dans la description qui suit, faite à titre d'exemple, il est question de la fixation d'un module de type radiateur de refroidissement dans le compartiment moteur d'un véhicule automobile. L'invention ne se limite cependant pas à la fixation de ce seul type de module. Elle concerne notamment les autres échangeurs de chaleur, tels que les radiateurs de suralimentation et les condenseurs.

L'invention a pour but de permettre la fixation d'un module sur des moyens de support qui ne forment pas une unique pièce. Par exemple, une première partie d'extrémité d'un module doit être fixée (ou solidarisée) à la structure du véhicule, comme son châssis, tandis qu'une seconde partie d'extrémité, opposée à la première, doit être solidarisée (ou fixée) à une partie de la face avant de ce même véhicule.

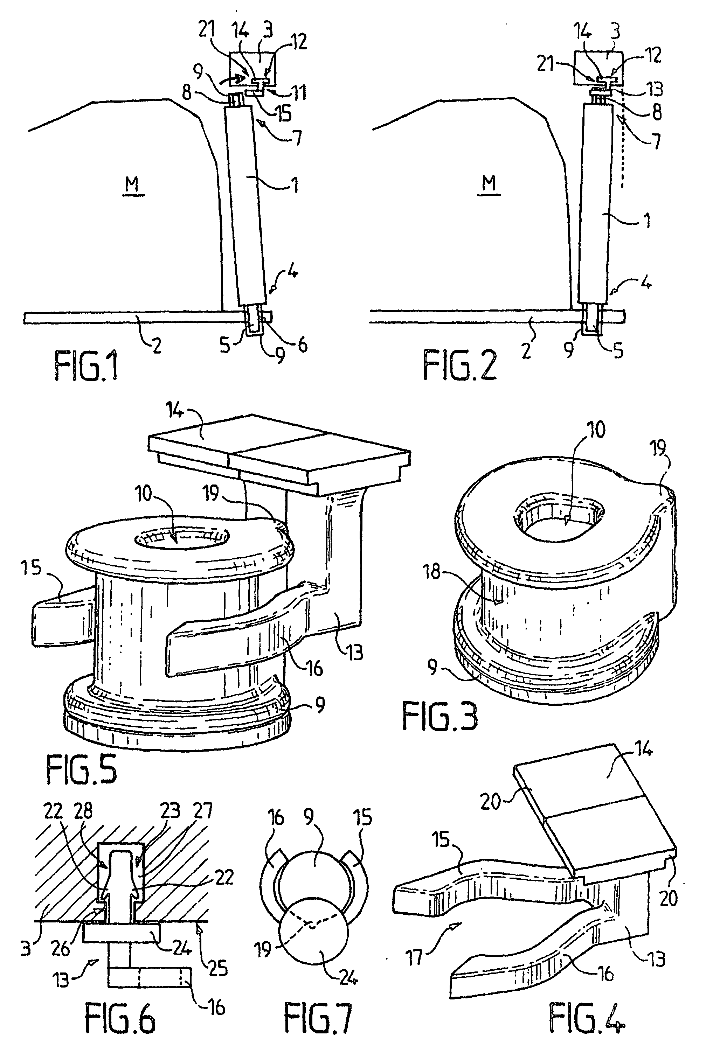

Dans ce qui suit on décrira une application de l'invention à la fixation d'un échangeur de chaleur, de type radiateur de refroidissement 1 sur, d'une part, la structure du véhicule, et d'autre part, la traverse 3 de la face avant du véhicule. Cette installation s'effectue, comme illustré sur les figures 1 et 2 à l'intérieur du compartiment moteur du véhicule, et plus précisément devant la zone occupée par le moteur M.

Classiquement, un radiateur de refroidissement comprend dans une première partie d'extrémité 4, dite "inférieure" du fait de son positionnement dans l'exemple illustré, deux pions de fixation 5 destinés à être introduits dans des orifices 6 prévus à cet effet dans des parties de la structure 2 du véhicule. Il comprend par ailleurs, dans une seconde partie d'extrémité 7, dite "supérieure", opposée à la première partie d'extrémité 4, au moins un pion de fixation 8, et plus préférentiellement deux pions de fixation placés sensiblement au même niveau, mais écartés l'un de l'autre.

L'exemple présenté sur les figures 1 et 2 étant une vue en coupe transversale suivant l'axe longitudinal médian du véhicule, seuls sont visibles sur le radiateur de refroidissement 1 un pion de fixation inférieur 5 et un pion de fixation supérieur 8.

Afin de permettre l'absorption des vibrations et des chocs, chaque pion de fixation est entouré d'une garniture élastique. Un exemple particulier de garniture élastique 9 de forme générale cylindrique, destinée à coopérer avec le dispositif de fixation selon l'invention, est illustré sur la figure 3. Pour les pions de fixation inférieurs 5, des types de garnitures élastiques moins élaborés peuvent être envisagés.

L'installation du module 1 nécessite tout d'abord le positionnement des garnitures élastiques autour des pions de fixation 5 et 8. Pour ce faire, la garniture élastique comporte un évidement central 10 destiné à recevoir le pion de fixation.

Une fois équipés de leurs garnitures élastiques, les pions de fixation inférieurs 5 sont introduits dans les orifices 6 de la structure 2, comme illustré sur la figure 1.

Ensuite, il n'y a plus qu'à faire pivoter légèrement (dans le sens de la flèche de la figure 1) le module 1 en direction du dispositif de fixation "supérieur" 11, qui va être décrit ci-après, jusqu'à ce que les pions de fixation supérieurs 8 équipés de leurs garnitures élastiques 9 soient immobilisés par ce dispositif de fixation supérieur 11 qui est lui-même solidarisé à la traverse 3 de la face avant.

Sur les figures 4 et 5 se trouve illustré un premier mode de réalisation d'un organe de fixation 13 selon l'invention destiné à coopérer avec une garniture élastique du type de celle illustrée sur la figure 3 ainsi qu'avec un moyen de fixation 12 du type de celui illustré sur les figures 1 et 2.

Dans ce premier mode de réalisation, le dispositif de fixation supérieur 11, selon l'invention, comprend donc un organe amovible 13 muni d'une première extrémité comportant deux bras élastiques 15 et 16, présentant des concavités orientées l'une vers l'autre, et délimitant une espèce de pince élastique 17, et d'une seconde extrémité 14, opposée à la première, en forme de "semelle" sensiblement parallélépipédique.

Les bras 15 et 16 de la pince 17 présentent chacun une forme permettant d'enserrer la face périphérique externe 18 de la garniture 9, de manière à l'immobiliser équipée de son pion de fixation supérieur 8.

Préférentiellement, comme illustré sur la figure 3, la garniture comporte sur sa surface périphérique externe 18 un renflement 19 permettant de faciliter son introduction à l'intérieur de la pince 17. La garniture présentant dans cet exemple une forme générale cylindrique, il est préférable que le renflement 19 soit de type axial, et par conséquent s'étende sensiblement parallèlement aux génératrices du cylindre. Par ailleurs, et toujours de préférence, le renflement axial 19 présente, dans une vue en coupe transversale perpendiculaire auxdites génératrices, une forme en V, la partie ouverte du V étant orientée vers la cavité centrale 10.

La semelle 14 de l'organe amovible 13 présente deux bords linéaires 20, sensiblement parallèles entre eux, qui délimitent deux nervures destinées à être introduites, par coulissement, dans deux rainures 21 prévues à cet effet dans la traverse 3 de la face avant.

Du fait que l'organe amovible 13 peut coulisser à l'intérieur des nervures 21, il dispose d'un degré de liberté de mouvement en translation qui permet de rattraper un éventuel écart de tolérance entre les pions de fixation et les moyens de fixation de la structure 2 et de la traverse 3 de la face avant. Ce degré de liberté de mouvement est choisi de sorte qu'il assure un mouvement conjoint des deux bras 15 et 16 dans lequel l'un d'eux se déplace en direction de l'autre, ici par translation.

Pour rattraper un écart, il suffit de déplacer (translater) très légèrement l'organe amovible 13 à l'intérieur de ses rainures 21 et permettre ainsi l'immobilisation du pion de fixation supérieur 8 équipé de sa garniture 9 à l'intérieur des pinces 17 formées par les bras élastiques 15 et 16 de chaque organe amovible 13.

Les écarts de tolérance étant relativement limités, les déplacements de l'organe doivent donc être également limités. En conséquence, dans une variante très avantageuse, c'est la garniture qui, du fait de son renflement 19, déplace spontanément et automatiquement l'organe amovible 13 lorsque ce renflement n'est pas sensiblement centré sur le milieu de l'intervalle séparant les extrémités des deux bras 15 et 16.

Des moyens de butée peuvent être envisagés de manière à limiter les déplacements de l'organe 13.

Il est clair que lorsque la partie d'extrémité supérieure 7 du module comporte deux pions de fixation 8 écartés l'un de l'autre, et placés en un même niveau, on prévoit deux organes amovibles présentant des degrés de liberté de mouvement de même type.

Bien entendu, d'autres types de moyens de solidarisation de l'extrémité supérieure de l'organe amovible 13 à la traverse 3 peuvent être envisagés, pourvu qu'ils offrent un degré de liberté de mouvement permettant de rattraper un écart de tolérance.

Un tel autre moyen de solidarisation est illustré sur les figures 6 et 7.

Dans ce second mode de réalisation de l'organe amovible 13, l'extrémité "inférieure" (ou première) de l'organe amovible 13 comporte toujours deux bras 15 et 16 qui forment une espèce de pince élastique 17 du type de celle décrite en référence aux figures 4 et 5. L'extrémité "supérieure" (ou seconde) 28, opposée à l'extrémité inférieure, est en revanche différente.

Elle est en effet en forme d'axe de manière à permettre un degré de liberté de mouvement en rotation. Elle comporte dans l'exemple illustré, en vue de sa solidarisation à la traverse 3 de la face avant, des moyens d'encliquetage de type ergots 22, de préférence élastiques, destinés à être introduit à l'intérieur d'un logement 23 formé dans la traverse 3. Ce logement 23 comporte une première partie 26 formant goulot d'étranglement de dimension sensiblement égale, par valeur supérieure, à celle de la section transverse de la seconde extrémité de l'organe amovible 13, qui comporte les ergots 22, et prolongée par une seconde partie 27 de plus grande dimension. De la sorte, lorsque les ergots 22 ont pénétré à l'intérieur de la partie la plus large 27 du logement 23, ceux-ci ne peuvent plus reculer du fait qu'ils sont bloqués par le goulot d'étranglement 26.

Préférentiellement, et comme illustré sur les figures 6 et 7, l'organe amovible 13 comporte entre les ergots 22 et les bras 15 et 16 une semelle 24 destinée à s'appuyer sur la face externe 25 de la traverse 3.

Dans ce second mode de réalisation, pour rattraper un écart de tolérance, il suffit d'entraîner légèrement en rotation, dans un sens ou dans l'autre, l'organe amovible 13 jusqu'à ce que la garniture élastique 9 puisse être introduite, par son renflement 19, entre les bras 15 et 16, pour y être enserrée.

Comme pour le premier mode de réalisation, la garniture 9 peut, du fait de son renflement 19, entraîner spontanément en rotation l'organe amovible 13 lorsque ce renflement n'est pas sensiblement centré sur le milieu de l'intervalle séparant les extrémités des deux bras 15 et 16.

L'invention ne se limite pas aux modes de réalisation décrits ci-avant à titre d'exemples, mais elle s'étend à toutes les variantes que pourra développer l'homme de l'art dans le cadre des revendications ci-après.

Ainsi, on a décrit un dispositif de fixation permettant de solidariser un module à une partie d'une face avant d'un véhicule automobile. Mais, le dispositif pourra permettre, de façon plus générale, la fixation d'un module à tout type de moyen de support lié à la structure du véhicule, comme notamment des longerons ou des traverses.

Par ailleurs, il a été décrit deux types de moyen de solidarisation (rotation et coulissement) de l'organe amovible aux moyens de support. Mais tout type de moyen de solidarisation autorisant un degré de liberté de mouvement pourra être envisagé.

## Revendications

1. Dispositif de fixation d'un module sur des moyens de support d'un véhicule automobile, ledit module (1) comprenant une partie d'extrémité (7) munie d'au moins un pion de fixation (8) propre à coopérer avec des moyens de fixation (12) portés par lesdits moyens de support (3),
**caractérisé en ce qu'**il comprend une garniture élastique (9), de forme choisie, munie d'un évidement (10) propre à recevoir le pion de fixation (8) de la partie d'extrémité (7), et un organe amovible (13) muni d'une première extrémité comportant deux bras élastiques (15,16) présentant des concavités tournées l'une vers l'autre de manière à enserrer ladite garniture recevant le pion de fixation et d'une seconde extrémité (14,28) agencée pour coopérer avec les moyens de fixation (12,23) en vue d'une solidarisation auxdits moyens de support (3) avec un degré de liberté de mouvement choisi de sorte qu'il assure un mouvement conjoint des deux bras dans lequel l'un d'eux se déplace en direction de l'autre.

2. Dispositif selon l'une des revendications précédentes, **caractérisé en ce qu'**il comporte deux organes (13) propres à être solidarisés auxdits moyens de support (3) avec des degrés de liberté de mouvement de même type de manière à enserrer deux garnitures (9) recevant des pions de fixation (8) écartés l'un de l'autre, et placés en un même niveau, sur la partie d'extrémité (7) du module (1).

3. Dispositif selon l'une des revendications 1 et 2, **caractérisé en ce que** ledit organe (13) est propre à être solidarisé à une traverse appartenant à une face avant d'un véhicule automobile et formant lesdits moyens de support (3).

4. Dispositif selon l'une des revendications 1 à 3, **caractérisé en ce que** lesdits moyens de fixation (12) sont réalisés sous la forme de deux rainures parallèles (21) et **en ce que** ladite seconde extrémité (14) de l'organe (13) comporte une semelle munie de deux bords parallèles (20) agencés pour être introduits par coulissement dans lesdites rainures tout en autorisant un déplacement linéaire dudit organe relativement auxdits moyens de support (3).

5. Dispositif selon l'une des revendications 1 à 3, **caractérisé en ce que** ladite seconde extrémité (28) de l'organe (13) est en forme d'axe et comprend des moyens d'encliquetage (22) propres à coopérer avec un logement (23) formant lesdits moyens de fixation et autorisant une rotation dudit organe relativement auxdits moyens de support (3).

6. Dispositif selon la revendication 5, **caractérisé en ce que** ledit organe (13) comporte, entre lesdits moyens d'encliquetage (22) et lesdits bras (15,16), une semelle (24) radiale destinée à s'appuyer contre une surface externe (25) des moyens de support (3), qui délimite ledit logement (23).

7. Dispositif selon l'une des revendications 1 à 6, **caractérisé en ce que** ladite garniture (9) présente une forme générale cylindrique.

8. Dispositif selon la revendication 7, **caractérisé en ce que** ladite garniture (9) comporte sur sa surface externe (18) destinée à être au contact des bras (15,16) un renflement (19) s'étendant sensiblement parallèlement aux génératrices du cylindre.

9. Dispositif selon la revendication 8, **caractérisé en ce que** ledit renflement (19) présente, dans une vue en coupe transversale, une forme en V.

10. Utilisation d'un dispositif selon l'une des revendications précédentes pour la fixation d'un module (1) de type échangeur de chaleur, choisi parmi un radiateur de refroidissement, un condenseur et un radiateur d'air de suralimentation.

## Patentansprüche

1. Vorrichtung zur Befestigung eines Moduls an Haltemitteln eines Automobilfahrzeugs, wobei das Modul (1) ein Endteil (7) umfasst, das mit zumindest einem Befestigungsstift (8) versehen ist, der geeignet ist, mit von den Haltemitteln (3) getragenen Befestigungsmitteln (12) zusammenzuwirken,
**dadurch gekennzeichnet, dass** sie einen elastischen Besatz (9) von ausgewählter Form umfasst, der mit einer Ausnehmung (10) versehen ist, die geeignet ist, den Befestigungsstift (8) des Endteils (7) aufzunehmen, und ein abnehmbares Organ (13), das mit einem ersten Ende versehen ist, das zwei elastische Arme (15, 16) umfasst, die einander zugewendete Konkavitäten aufweisen, um den den Befestigungsstift aufnehmenden Besatz einzuklemmen, und mit einem zweiten Ende (14, 28), das dafür ausgebildet ist, mit den Befestigungsmitteln (12, 23) hinsichtlich einer festen Anbringung an den Haltemitteln (3) mit einem ausgewählten Bewegungsfreiheitsgrad zusammenzuwirken, so dass eine gemeinsame Bewegung der zwei Arme sichergestellt ist, bei der sich einer von ihnen in die Richtung des anderen bewegt.

2. Vorrichtung nach einem der vorhergehenden Ansprüche,
**dadurch gekennzeichnet, dass** sie zwei Organe (13) umfasst, die geeignet sind, an den Haltemitteln (3) mit Bewegungsfreiheitsgraden der gleichen Art fest angebracht zu werden, um zwei Befestigungsstifte (8) aufnehmende Besätze (9) einzuklemmen, die zueinander beabstandet sind und auf gleicher Höhe am Endteil (7) des Moduls (1) platziert sind.

3. Vorrichtung nach einem der Ansprüche 1 und 2,
**dadurch gekennzeichnet, dass** das Organ (13) geeignet ist, mit einer Strebe fest angebracht zu werden, die einer Vorderseite eines Automobilfahrzeugs angehört und die Haltemittel (3) bildet.

4. Vorrichtung nach einem der Ansprüche 1 bis 3,
**dadurch gekennzeichnet, dass** die Befestigungsmittel (12) in Form zweier paralleler Nuten (21) ausgeführt sind und dass das zweite Ende (14) des Organs (13) eine Grundplatte mit zwei parallelen Rändern (20) umfasst, die dafür ausgelegt sind, durch Gleiten in die Nuten eingeführt zu werden, während eine lineare Verschiebung des Organs relativ zu den Haltemitteln (3) gestattet wird.

5. Vorrichtung nach einem der Ansprüche 1 bis 3,
**dadurch gekennzeichnet, dass** das zweite Ende (28) des Organs (13) Achsform hat und Rastmittel (22) umfasst, die geeignet sind, mit einer Aufnahme (23) zusammenzuwirken, die die Befestigungsmittel bildet und eine Drehung des Organs relativ zu den Haltemitteln (3) gestattet.

6. Vorrichtung nach Anspruch 5, **dadurch gekennzeichnet, dass** das Organ (13) zwischen den Rastmitteln (22) und den Armen (15, 16) eine radiale Grundplatte (24) umfasst, die dazu bestimmt ist, an einer Außenfläche (25) der Haltemittel (3) zur Anlage zu kommen, die die Aufnahme (23) begrenzt.

7. Vorrichtung nach einem der Ansprüche 1 bis 6,
**dadurch gekennzeichnet, dass** der Besatz (9) eine im Großen und Ganzen zylindrische Form aufweist.

8. Vorrichtung nach Anspruch 7, **dadurch gekennzeichnet, dass** der Besatz (9) auf seiner Außenfläche (18), die dazu bestimmt sind, Kontakt mit den Armen (15, 16) zu haben, einen Wulst (19) umfasst, der sich im Wesentlichen parallel zu den Mittellinien des Zylinders erstreckt.

9. Vorrichtung nach Anspruch 8, **dadurch gekennzeichnet, dass** der Wulst (19) in einem transversalen Schnitt eine V-Form aufweist.

10. Verwendung einer Vorrichtung nach einem der vorhergehenden Ansprüche für die Befestigung eines Moduls (1) vom Wärmetauschertyp, wobei als Wärmetauscher ein Kühler, ein Kondensator oder ein Ladeluftkühler gewählt wird.

## Claims

1. Device for fastening a module to support means in a motor vehicle, the said module (1) comprising an end part (7) equipped with at least one fastening peg (8) able to collaborate with fastening means (12) borne by the said support means (3),
**characterized in that** it comprises an elastic fitting (9), of chosen shape, equipped with a recess (10) able to accommodate the fastening peg (8) of the end part (7), and a removable member (13) equipped with a first end having two elastic arms (15, 16) exhibiting concave sides facing towards each other so as to grip the said fitting housing the fastening peg and with a second end (14, 28) arranged to collaborate with the fastening means (12, 23) with a view to securing to the said support means (3) with a chosen degree of freedom of movement so that it causes joint movement of the two arms in which movement one of the arms moves towards to the other.

2. Device according to one of the preceding claims,
**characterized in that** it comprises two members (13) able to be secured to the said support means (3) with degrees of freedom of movement of the same type so as to grip two fittings (9) housing fastening pegs (8) separated from one another and placed at a same level on the end part (7) of the module (1).

3. Device according to one of Claims 1 and 2,
**characterized in that** the said member (13) can be secured to a crossmember belonging to a front face of a motor vehicle and forming the said support means (3).

4. Device according to one of Claims 1 to 3,
**characterized in that** the said fastening means (12) are produced in the form of two parallel grooves (21) and **in that** the second end (14) of the member (13) has a sole equipped with two parallel edges (20) designed to be introduced by sliding into the said grooves while allowing the said member to move linearly with respect to the said support means (3).

5. Device according to one of Claims 1 to 3,
**characterized in that** the said second end (28) of the member (13) is in the shape of a pin and has snap-fastening means (22) able to collaborate with housing (23) forming the said fastening means and allowing the said member to rotate relative to the said support means (3).

6. Device according to Claim 5, **characterized in that** the said member (13) comprises, between the said snap-fastening means (22) and the said arms (15, 16), a radial sole (24) intended to rest against an external surface (25) of the support means (3), which surface delimits the said housing (23).

7. Device according to Claims 1 to 6, **characterized in that** the said fitting (9) has a cylindrical overall shape.

8. Device according to Claim 7, **characterized in that** the said fitting (9) on its external surface (18) intended to be in contact with the arms (15, 16) has a bulge (19) running roughly parallel to the generatrices of the cylinder.

9. Device according to Claim 8, **characterized in that** the said bulge (19) when viewed in cross section, is in the shape of a V.

10. Use of a device according to one of the preceding claims for fixing a module (1) of the heat exchanger type, chosen from a cooling radiator, a condenser and an intercooler.
